# EUROPÄISCHE PATENTSCHRIFT

(11) **EP 3 258 064 B1**
(45) Veröffentlichungstag und Bekanntmachung des Hinweises auf die Patenterteilung: **19.02.2020**
(21) Anmeldenummer: 17174881.7
(22) Anmeldetag: 08.06.2017
(51) Int. Cl.: F01D 5/02

(54) **WUCHTGEWICHT FÜR EINE LAUFSCHAUFEL EINER TURBINENSTUFE**
BALANCING WEIGHT FOR A ROTOR BLADE OF A TURBINE STAGE
MASSE D'ÉQUILIBRAGE POUR UNE AUBE DIRECTRICE D'UN ÉTAGE DE TURBINE

(30) Priorität: 14.06.2016 DE 102016210454
(43) Veröffentlichungstag der Anmeldung: 20.12.2017
(73) Patentinhaber: MTU Aero Engines AG, 80995 München (DE)
(72) Erfinder: Wöhler, Marcus, 82266 Inning am Ammersee (DE)

(56) Entgegenhaltungen:
- EP-A1- 2 808 486
- EP-A2- 1 605 134
- DE-A1-102004 026 365
- US-A- 5 011 374

## Beschreibung

Die vorliegende Erfindung betrifft ein Wuchtgewicht für eine Laufschaufel einer Turbinenstufe einer Gasturbine, insbesondere Fluggasturbine, umfassend einen ersten gebogenen Befestigungsabschnitt, der mit einer axialen Vorderkante eines Deckbandes der Laufschaufel koppelbar ist, einen zweiten Befestigungsabschnitt, der mit einer axialen Hinterkante des Deckbandes koppelbar ist, und einen den ersten Befestigungsabschnitt und den zweiten Befestigungsabschnitt verbindenden Mittelabschnitt. Die Formulierung "Wuchtgewicht für eine Laufschaufel" bedeutet dabei insbesondere, dass das Wuchtgewicht zur Anbringung an der Laufschaufel geeignet ist.

Richtungsangaben wie "Axial-" bzw. "axial", "Radial-" bzw. "radial" und "Umfangs-" sind grundsätzlich auf die Maschinenachse bzw. der Hauptströmungsrichtung der Gasturbine bezogen zu verstehen, sofern sich aus dem Kontext nicht explizit oder implizit etwas anderes ergibt.

Aus der US 5.011,374 und der EP 2 808 486 A1 ist bekannt, ein Wuchtgewicht im Bereich von zwei benachbarten Deckbandabschnitten anzuordnen, wobei das Wuchtgewicht sich über beide Deckbandabschnitte erstreckt. Eine derartige Anordnung des Wuchtgewichts weist den Nachteil auf, dass die beiden benachbarten Deckbandabschnitte relativen Bewegungen unterliegen, so dass hierdurch auch das Wuchtgewicht in seiner Position verändert wird und ungünstige Spannungsverhältnisse erzeugt oder auch eine Befestigung des Wuchtgewichts sich mit der Zeit lockert, was zu negativem Reibverschleiß führen kann.

Aus der EP 1 605 134 A2 ist ein Wuchtgewicht bekannt, das nur an einer einzelnen Laufschaufel angebracht ist. Ein hierzu ähnliches Wuchtgewicht zeigt auch die DE 10 2004 026 365 A1

Ferner ist auch das Anbringen von Wuchtgewichten in der Regel ein aufwändiger Arbeitsschritt, weil hierzu Werkzeuge zur Befestigung des Wuchtgewichts in den bzw. die Zwischenräume zwischen den Laufschaufeln eines Laufschaufelkranzes eingeführt werden müssen. Dabei besteht die Gefahr von Beschädigungen an den Laufschaufeln.

Aufgabe der Erfindung ist es, ein Wuchtgewicht bereitzustellen, mit dem die obigen Nachteile vermieden werden können.

Zur Lösung der Aufgabe wird ein Wuchtgewicht mit den Merkmalen der unabhängigen Ansprüche 1 und 6 vorgeschlagen. Dabei nimmt der zweite Befestigungsabschnitt vor einer Montage des Wuchtgewichts an der Laufschaufel eine erste Relativstellung zum ersten Befestigungsabschnitt einnimmt und nach der Montage des Wuchtgewichts an der Laufschaufel eine zweite Relativstellung zum ersten Befestigungsabschnitt ein, wobei in der zweiten Relativstellung der Mittelabschnitt oder/und der zweite Befestigungsabschnitt verformt ist, insbesondere plastisch verformt ist.

Das Wuchtgewicht ist also so ausgebildet, dass der zweite Befestigungsabschnitt relativ zum ersten gebogenen Befestigungsabschnitt von einer Ausgangsposition in eine Montageposition verformt wird. Dabei stellt die Ausgangsposition (erste Relativstellung) einen Zustand des Wuchtgewichts dar vor dessen Anbringung am Deckband der Laufschaufel. In der Montageposition, in der der erste gebogene Abschnitt mit der vorderen axialen Deckbandkante gekoppelt ist, wird durch die Verformung des zweiten Befestigungsabschnitts bzw. des Mittelabschnitts die Kopplung zwischen dem zweiten Befestigungsabschnitt und dem Deckbandabschnitt, insbesondere an dessen axial hinteren Deckbandkante erreicht.

Der erste Befestigungsabschnitt kann derart gebogen sein, dass der gebogene erste Befestigungsabschnitt an der axialen Vorderkante des Deckbandes einhängbar ist und im eingehängten Zustand am Deckband zumindest in radialer Richtung und in Umfangsrichtung gesichert ist. Der erste Befestigungsabschnitt ist beispielsweise hakenartig oder U-förmig oder in einer sonstigen geeigneten Weise gebogen, dass das gewünschte Einhängen, das auch als eine Art formschlüssige Verbindung verstanden werden kann, ermöglicht werden kann. Es wird darauf hingewiesen, dass mit dem Begriff Einhängen nicht zwingend eine unter Wirkung der Schwerkraft hängende Aufnahme des ersten Befestigungsabschnitts verstanden wird, vielmehr kann ein solches Einhängen des gebogenen ersten Befestigungsabschnitts auch entlang der axialen Richtung realisiert werden. Das Einhängen kann auch als in Eingriff bringen verstanden werden.

Das Wuchtgewicht ist erfindungsgemäß als bandartiges Metallelement ausgebildet, wobei das bandartige Metallelement ausgehend von einem ersten Ende bis zu einem zweiten Ende mehrere gebogene Bereiche aufweist. Dabei kann das erste Ende ein freies Ende des ersten Befestigungsabschnitts sein und das zweite Ende kann ein freies Ende des zweiten Befestigungsabschnitts sein. Wie bereits oben erläutert weist zumindest der erste Befestigungsabschnitt eine oder mehrere gebogene Bereiche bzw. Abschnitte auf. Aber auch der zweite Befestigungsabschnitt kann in der ersten oder/und der zweiten Relativstellung gebogene Bereiche oder Abschnitte aufweisen. Insbesondere kann der zweite Befestigungsabschnitt gebogene Bereiche aufweisen, die beim Übergang von der ersten Relativstellung in die zweite Relativstellung nicht selbst verformt werden.

Der Mittelabschnitt weist erfindungsgemäß bezogen auf die erste Relativstellung des zweiten Befestigungsabschnitts einen Torsionsabschnitt auf, in dem das bandartige Metallelement um seine Bandlängsachse in eine erste Drehrichtung verdreht ist, insbesondere um etwa 90° verdreht ist. Anders ausgedrückt kann auch davon gesprochen werden, dass der Mittelabschnitt um etwa 90° gewunden ist entlang der Bandlängsachse.

Erfindungsgemäß wird der Mittelabschnitt bezogen auf die zweite Relativstellung des zweiten Befestigungsabschnitts um die Bandlängsachse in eine zweite Drehrichtung, die entgegengesetzt zur ersten Drehrichtung ist, verdreht derart dass der Torsionsabschnitt im Wesentlichen gestreckt ist. In der zweiten Relativstellung ist der gewundene Torsionsbereich also wieder zurückgedreht, so dass keine Windung mehr im Mittelabschnitt vorhanden ist. Wenn der Mittelabschnitt in der zweiten Relativstellung des zweiten Befestigungsabschnitts im Wesentlichen wieder gestreckt ausgeführt ist, kann sich der Mittelabschnitt sich an eine radiale Innenseite des Deckbandabschnitts anlegen und verläuft entlang einer Seite der betreffenden Laufschaufel auf dem Deckbandabschnitt.

Der zweite Befestigungsabschnitt kann mehrere längliche Öffnungen aufweisen, die ausgehend von einem freien Ende des zweiten Befestigungsabschnitts in regelmäßigen Abständen zueinander angeordnet sind. Ferner können hierbei die länglichen Öffnungen im Wesentlichen parallel zu einer Biegeachse verlaufen, um die der zweite Befestigungsabschnitt plastisch verformt ist in der zweiten Relativstellung. Die länglichen Öffnungen dienen insbesondere dazu, dass Verformen bzw. Biegen des zweiten Befestigungsabschnitts zu erleichtern, da seitlich der länglichen Öffnungen nur wenig Material des zweiten Befestigungsabschnitts verformt werden muss.

An den ersten Befestigungsabschnitt kann sich ein Schaufelkopplungsabschnitt anschließen, welcher derart ausgebildet ist, dass er mit einer Vorderkante der Laufschaufel koppelbar ist. Ein derartiger Schaufelkopplungsabschnitt dient dabei insbesondere einer Sicherung des Wuchtgewichts in axialer Richtung.

Gemäß einem weiteren Aspekt betrifft die Erfindung auch einen Laufschaufelkranz einer Turbinenstufe einer Gasturbine, insbesondere Fluggasturbine, mit mehreren in Umfangsrichtung nebeneinander angeordneten Laufschaufeln, die an ihrem radial äußeren Enden einen jeweiligen Deckbandabschnitt aufweisen mit einer axial vorderen Deckbandkante und einer axial hinteren Deckbandkante, wobei an wenigstens einer Laufschaufel an ihrem Deckbandabschnitt ein erfindungsgemäßes Wuchtgewicht angeordnet ist, wobei das Wuchtgewicht einen ersten gebogenen Befestigungsabschnitt, der mit der axial vorderen Deckbandkante gekoppelt ist, einen zweiten Befestigungsabschnitt, der mit der axial hinteren Deckbandkante gekoppelt ist, und einen den ersten gebogenen Befestigungsabschnitt und den zweiten Befestigungsabschnitt verbindenden Mittelabschnitt umfasst. Dabei nimmt der zweite Befestigungsabschnitt vor einer Montage des Wuchtgewichts an der Laufschaufel eine erste Relativstellung zum ersten Befestigungsabschnitt ein und nimmt nach der Montage des Wuchtgewichts an der Laufschaufel eine zweite Relativstellung zum ersten Befestigungsabschnitt ein, wobei in der zweiten Relativstellung der Mittelabschnitt oder/und der zweite Befestigungsabschnitt verformt ist, insbesondere plastisch verformt ist. Vorzugsweise umfasst der Laufschaufelkranz eine Vielzahl von Einzelschaufeln oder ist sogar ausschließlich aus solchen gebildet, wobei ein entsprechendes Wuchtgewicht vorzugsweise nur mit einer Einzelschaufel in Kontakt steht, nicht jedoch mit mehreren. Insbesondere erstreckt sich das Wuchtgewicht vorzugsweise nicht über einen Deckbandspalt zwischen zwei in Umfangsrichtung benachbarten Einzelschaufeln hinweg. Dies hat den Vorteil, dass das Wuchtgewicht auch bei im Betrieb unterschiedlichen Kriechlängungen der Einzelschaufeln sicher gehalten werden kann.

Ferner ist das Wuchtgewicht vorzugsweise derart ausgebildet, dass es sich kontaktfrei bezüglich der Hinterkante einer ihm zugeordneten Schaufel im Laufschaufelkranz montieren lässt. Insbesondere bei Anwendungen im Hochtemperaturbereich werden vorzugsweise als Schaufelgrundwerkstoff verhältnismäßig spröde Materialien, wie zum Beispiel ein TiAl-Basiswerkstoff, verwendet. Da bei einer solchen Schaufel in der Regel die Hinterkante im Vergleich zur Vorderkante relativ dünn ausgebildet ist, ist die Hinterkante entsprechend empfindlich hinsichtlich Lasteinwirkungen. Indem sich das erfindungsgemäße Wuchtgewicht nicht an der Hinterkante abstützt, können Beschädigungen der empfindlichen Hinterkante zuverlässig vermieden werden. Stattdessen kann das erfindungsgemäße Wuchtgewicht durch die plastische Verformung bei der Montage an seinem axial hinteren Ende formschlüssig mit dem Deckband der Laufschaufel gekoppelt werden. Das Deckband weist vorzugsweise im dafür vorgesehenen Kopplungsstelle einen Rücksprung in axialer Richtung auf. An seinem zweiten Befestigungsabschnitt kann das Wuchtgewicht ein weiteres freies Ende aufweisen, welches sich im montierten Zustand des Wuchtgewichts vorzugsweise auf der der Schaufel bzw. des Schaufelblatts abgewandten Seite des Deckbandes in Umfangsrichtung in Richtung auf die Hinterkante der Schaufel bzw. des Schaufelblatts zu erstreckt. Somit kann die Masse des Wuchtgewichts in Umfangsrichtung betrachtet relativ nah an der Schaufel bzw. dem Schaufelblatt positioniert werden, was den Vorteil hat, dass unerwünschte Verformungen des Deckbandes reduziert werden können, wenn die Fliehkräfte auf das Wuchtgewicht und das Deckband wirken.

Schließlich betrifft die Erfindung auch ein Verfahren zur Anbringung eines Wuchtgewichts an einem Deckbandabschnitt einer Laufschaufel eines Laufschaufelkranzes einer Turbinenstufe einer Gasturbine, das folgende die Schritte aufweist:
Bereitstellen von einem erfindungsgemäßen Wuchtgewicht mit einem ersten gebogenen Befestigungsabschnitt, einem zweiten Befestigungsabschnitt und einem den ersten Befestigungsabschnitt und den zweiten Befestigungsabschnitt verbindenden Mittelabschnitt; Einführen des ersten gebogenen Befestigungsabschnitts und des Mittelabschnitts zwischen zwei benachbarten Laufschaufeln des Laufschaufelkranzes entgegen einer Strömungsrichtung des Gasturbine;
Anordnen und Koppeln des ersten gebogenen Befestigungsabschnitts an einer axial vorderen Deckbandkante des Deckbandabschnitts, insbesondere durch Einhängen des ersten gebogenen Befestigungsabschnitts;
Verformen des zweiten Befestigungsabschnitts oder/und des Mittelabschnitts, so dass der zweite Befestigungsabschnitt mit einer axial hinteren Deckbandkante des Deckbandabschnitts gekoppelt wird.

Nachfolgend wird die Erfindung unter Bezugnahme auf die anliegenden Figuren beispielhaft und nicht einschränkend beschrieben.
Fig. 1 zeigt in einer vereinfachten schematischen Perspektivdarstellung einen Laufschaufelabschnitt mit dem zugehörigen Deckband und einem daran angebrachten Wuchtgewicht von axial vorne.
Fig. 2 zeigt in einer vereinfachten schematischen Perspektivdarstellung das Wuchtgewicht der Fig. 1 vor der Montage an der bzw. einer Laufschaufel.
Fig. 3 zeigt in einer vereinfachten schematischen Perspektivdarstellung den Laufschaufelabschnitt der Fig. 1 mit dem zugehörigen Deckband und dem daran angebrachten Wuchtgewicht von axial hinten.
Fig. 4 zeigt in einer vereinfachten schematischen Perspektivdarstellung einen Laufschaufelabschnitt mit dem zugehörigen Deckband und einem daran angebrachten alternativen Wuchtgewicht von axial hinten.
Fig. 5 zeigt in einer vereinfachten schematischen Perspektivdarstellung einen Laufschaufelabschnitt mit dem zugehörigen Deckband und einem daran angebrachten alternativen Wuchtgewicht von axial hinten.
Fig. 6 zeigt in einer vereinfachten schematischen Perspektivdarstellung einen Laufschaufelabschnitt mit dem zugehörigen Deckband und einem daran angebrachten weiteren Wuchtgewicht von axial vorne.
Fig. 7 zeigt einen axial hinteren Befestigungsabschnitt eines Wuchtgewichts.
Fig. 8 zeigt in einer Art perspektivischer Teilschnittdarstellung ein Wuchtgewicht an einer Laufschaufel, wobei das Wuchtgewicht einen axial hinteren Befestigungsabschnitt entsprechend der Fig. 6 aufweist.

Die in den Figuren gewählten Darstellungen sind eher skizzenartig und sollen die Ausgestaltung von Wuchtgewichten illustrieren. Die Zeichnungen haben nicht die Qualität von maßhaltigen technischen Zeichnungen, dies betrifft insbesondere auch gewisse perspektivische Verzerrungen oder Ungenauigkeiten bei der Linienführung.

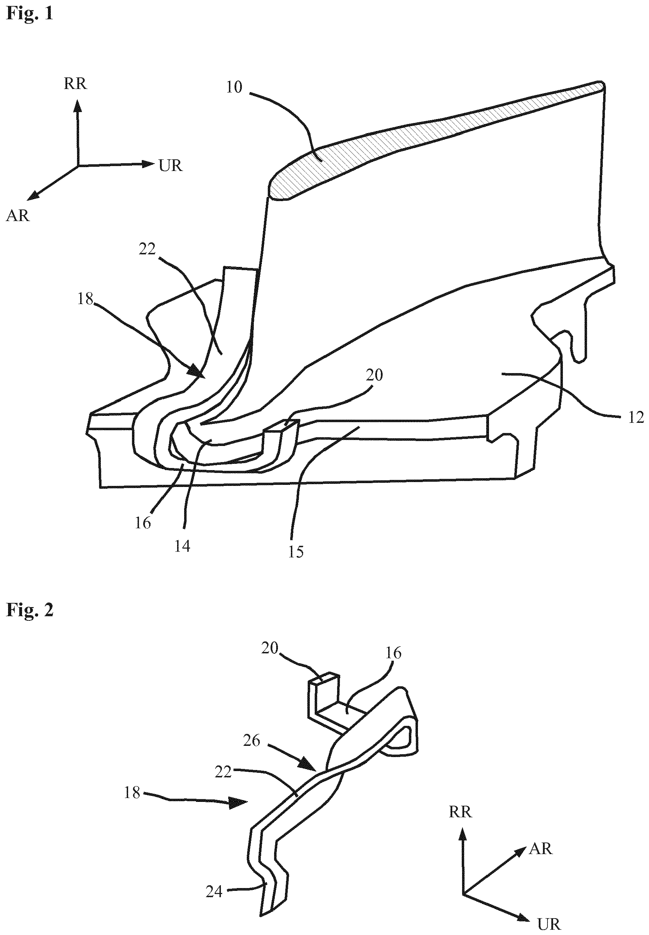

Fig. 1 zeigt in einer vereinfachten und schematischen Darstellung einen radial äußeren Teil einer Laufschaufel 10 und ein zur Laufschaufel 10 zugehöriges Deckband 12. Das Deckband 12 weist einen axialen Vorsprung 14 auf. Der Vorsprung 14 ist im Bereich der axialen Vorderkante 15 der Laufschaufel 10 ausgebildet. An der radialen Außenseite des Vorsprungs 14 ist ein erster Befestigungsabschnitt 16 eines Wuchtgewichts 18 eingehängt. Der erste Befestigungsabschnitt 16 ist ausgehend von einem freien Ende 20 mehrfach gebogen, und geht dann in einen Mittelabschnitt 22 über. Der Mittelabschnitt 22 erstreckt sich entlang des Deckbandes und entlang der Saugseite der Laufschaufel 10.

Fig. 2 zeigt das Wuchtgewicht 18 der Fig. 1 in einer vereinfachten perspektivischen Darstellung. Das Wuchtgewicht 18 weist neben dem bereits erwähnten ersten Befestigungsabschnitt 16 und dem daran anschließenden Mittelabschnitt 22 einen zweiten Befestigungsabschnitt 24 auf. Der zweite Befestigungsabschnitt 24 liegt im montierten Zustand des Wuchtgewichts 18 jeweils axial hinten und ist mit einer axialen Hinterkante eines Deckbands koppelbar. Der Mittelabschnitt 22 ist bei 26 entlang der Axialrichtung AR (Längsrichtung des bandartigen Mittelabschnitts 22) verdreht, hier beispielhaft um etwa 90°. Dieser verdrehte Bereich 26 kann auch als Torsionsbereich 26 bezeichnet werden. Der Mittelabschnitt 22 erstreckt sich im Wesentlichen entlang der Axialrichtung AR. Der erste Befestigungsabschnitt erstreckt sich im Wesentlichen entlang der Umfangsrichtung UR. Der zweite Befestigungsabschnitt 24 erstreckt sich im Wesentlichen in Radialrichtung RR. Der zweite Befestigungsabschnitt 24 befindet sich in der Darstellung der Fig. 2 in einer ersten Relativstellung zum ersten Befestigungsabschnitt 16. Diese erste Relativstellung nimmt der zweite Befestigungsabschnitt 24 ein, wenn das Wuchtgewicht noch nicht am Deckband der Laufschaufel befestigt ist. Fig. 2 zeigt also einen nicht montierten Zustand des Wuchtgewichts 18. Anders ausgedrückt weist das Wuchtgewicht 18 die in Fig. 2 dargestellte Konfiguration auf, bevor es an einer Laufschaufel angebracht wird.

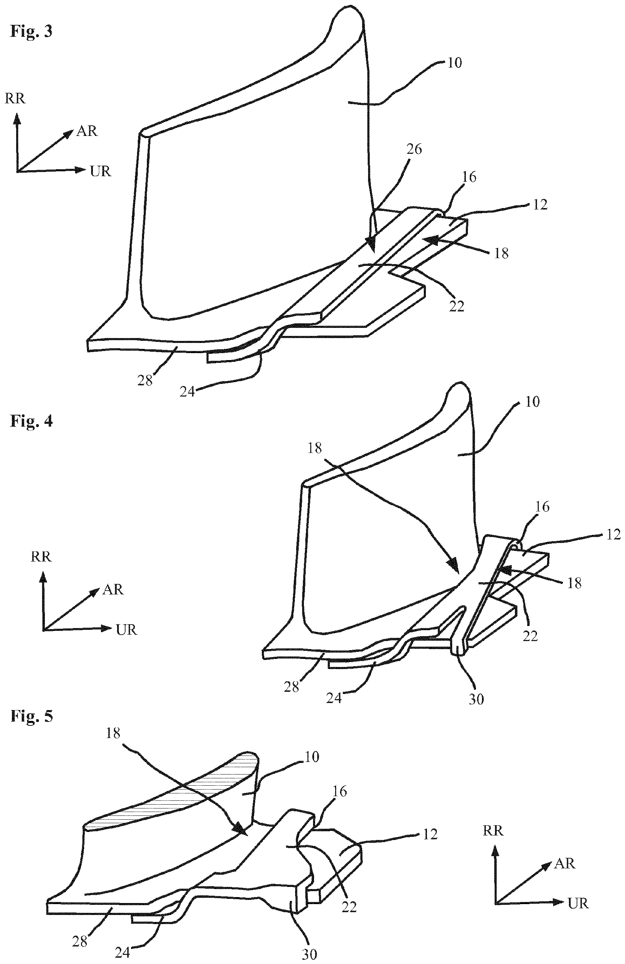

Fig. 3 Zeigt die Laufschaufel 10 der Fig. 1 in einer vereinfachten perspektivischen Ansicht von axial hinten. Der Mittelabschnitt 22 des Wuchtgewichts 18 weist, im Vergleich zum Zustand der Fig. 2 (nicht montierter Zustand des Wuchtgewichts), keinen verdrehten Bereich 26 mehr auf. Die Verdrehung des Mittelabschnitts 22 wurde aufgehoben, indem der zweite Befestigungsabschnitt 24 bezogen auf die Blickrichtung in Fig. 2 und Fig. 3 im Uhrzeigersinn verschwenkt worden ist. Durch dieses Verschwenken oder Verdrehen ist der zweite Befestigungsabschnitt 24 in eine zweite Relativstellung bezogen auf den ersten Befestigungsabschnitt 18 (in Fig. 3 nicht sichtbar) gebracht. In dieser zweiten Relativstellung ist der zweite Befestigungsabschnitt 24 mit einer axialen Hinterkante 28 des Deckbandes 12 gekoppelt.

In der Zusammenschau der Fig. 1 bis 3 kann auch der Vorgang des Anbringens eines Wuchtgewichts 18 gut nachvollzogen werden. Ein Wuchtgewicht 18 wird mit seinem ersten Befestigungsabschnitt 16 in axialer Richtung zwischen zwei Laufschaufeln hindurch eingeführt und zwar von axial hinten. Der erste Befestigungsabschnitt 18 wird dann an der axialen Vorderkante 15 des Deckbandes 12, insbesondere an dem Vorsprung 14 eingehängt. Wenn der erste Befestigungsabschnitt 18 positioniert ist, kann der Mittelabschnitt 22 an dem Deckband 12 entlang geführt werden. Der zweite Befestigungsabschnitt 24 befindet sich dann noch in der in Fig. 2 dargestellten ersten Relativstellung zum ersten Befestigungsabschnitt 16. Der zweite Befestigungsabschnitt 24 kann dann im Bereich der axialen Hinterkante 28 des Deckbandes 12 mittels eines geeigneten Werkezeugs erfasst und entsprechend verdreht werden. Dabei wird der verdrehte Bereich 26 des Mittelabschnitts (Fig. 2) wieder geöffnet, bzw. der Mittelabschnitt 22 wird wieder in eine im Wesentlichen torsionsfreie, bzw. ebene Ausrichtung gebracht (Fig. 3). Somit kann ein derartiges Wuchtgewicht auf einfache Weise entlang einer Laufschaufel eingeführt und am Deckband der Laufschaufel befestigt werden mittels einer Verformung des Wuchtgewichts, im vorliegenden Beispiel mittels einer Verformung des Mittelabschnitts.

Wie aus den Fig. 1 und 3 ersichtlich, ist der erste Befestigungsabschnitt 16 derart geformt, dass das Wuchtgewicht 18 in Radialrichtung RR, Umfangsrichtung UR und Axialrichtung AR sichert. Der zweite Befestigungsabschnitt 24 in seiner zweiten Relativstellung zum ersten Befestigungsabschnitt 16 sichert das Wuchtgewicht zusätzlich in Axialrichtung AR und in Radialrichtung RR. Somit ist das Wuchtgewicht 18 sicher am Deckband 12 angebracht.

Fig. 4 zeigt eine zur Fig. 3 ähnliche Darstellung, wobei das Wuchtgewicht 18 zusätzlich zum zweiten Befestigungsabschnitt 24, der hier ebenfalls in der zweiten Relativstellung zum ersten Befestigungsabschnitt 16 dargestellt ist, einen Sicherungsabschnitt 30 aufweist. Der zusätzliche Sicherungsabschnitt 30 bildet eine Sicherung in Axialrichtung AR und liegt an der axialen Hinterkante 28 des Deckbandes 12 an. Im Beispiel der Fig. 4 bilden der Sicherungsabschnitt 30 und der zweite Befestigungsabschnitt 24 ausgehend vom Mittelabschnitt 22 zwei leicht geneigt zueinander verlaufende Schenkel.

Fig. 5 zeigt eine zur Fig. 4 ähnliche Darstellung, wobei beim Wuchtgewicht 18 der Sicherungsabschnitt 30 und der zweite Befestigungsabschnitt 24 entlang der Hinterkante 28 des Deckbandes 12 durchgehend ausgeführt sind. Der Sicherungsabschnitt 30 dient auch in diesem Beispiel einer Sicherung in Axialrichtung AR.

Bei den Fig. 4 und 5 kann das Wuchtgewicht 18 in einem nicht montierten Zustand ebenfalls einen verdrehten Bereich 26 aufweisen, analog zum Wuchtgesicht in Fig. 2. Alternativ kann bei den Wuchtgewichten der Fig. 4 und 5 aber auch daran gedacht werden, dass nur der zweite Befestigungsabschnitt 24 nach unten gebogen ist in der ersten Relativstellung und bei der Montage entsprechend nach oben gebogen wird.

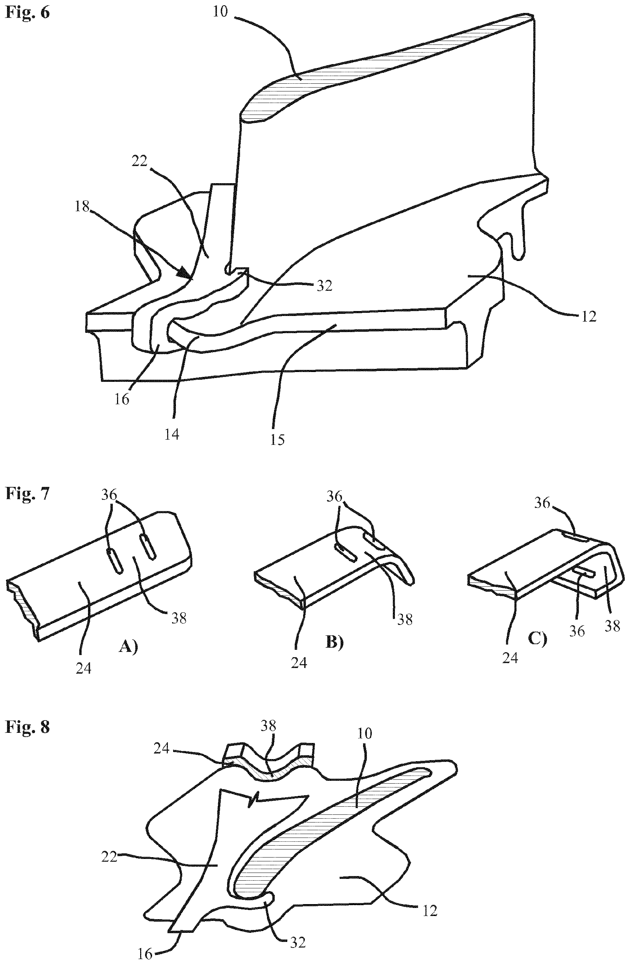

Fig. 6 zeigt eine zur Fig. 1 ähnliche Darstellung, wobei am Wuchtgewicht 18 im Anschluss an den ersten Befestigungsabschnitt 16 ein hakenartiger Einhängabschnitt 32 (Schaufelkopplungsabschnitt) vorgesehen ist, der im Bereich einer axialen Vorderkante der Laufschaufel 10 positioniert ist. Dieser Einhängabschnitt 32 dient dabei als Sicherung in Axialrichtung AR und Umfangsrichtung UR, während der erste Befestigungsabschnitt 16 zur Sicherung des Wuchtgewichts 18 in Axialrichtung AR und Radialrichtung RR dient. In dieser Ausgestaltung ist der erste Befestigungsabschnitt 16 um die Vorderkante 15 des Deckbandes gebogen und nicht um den Vorsprung 14 geschlungen, wie in Fig. 1.

Fig. 7 zeigt einen alternativen zweiten Befestigungsabschnitt 24 eines Wuchtgewichts. In seiner ersten Relativstellung zum ersten Befestigungsabschnitt ist der zweite Befestigungsabschnitt gemäß Fig. 7A im Wesentlichen eben ausgebildet. Der zweite Befestigungsabschnitt weist zu seiner Längserstreckung quer verlaufende Langlöcher oder Schlitze 36 auf. Wird ein Wuchtgewicht mit einem derartigen zweiten Befestigungsabschnitt 24 am Deckband einer Laufschaufel angebracht, kann nach dem Einführen des Wuchtgewichts und dem Einhängen des ersten Befestigungsabschnitts, der zweite Befestigungsabschnitt im Bereich der Langlöcher 36 verformt bzw. umgebogen werden, so dass er um die axiale Hinterkante (28) (Fig. 1, 3, 4, 5) des Deckbandes gebogen werden kann. Der Biegevorgang ist in den Fig. 7B und 7C schrittweise illustriert. Das Verformen bzw. Biegen des zweiten Befestigungsabschnitts 24 ist im Bereich der Langlöcher 36 vereinfacht aufgrund er strukturellen Schwächung des ansonsten bandartigen Befestigungsabschnitts 24. Wie in der Fig. 7C dargestellt, ist der zweite Befestigungsabschnitt 24 in der zweiten Relativstellung zweimal umgebogen bzw. verformt worden. Somit nimmt der zweite Befestigungsabschnitt eine andere Relativstellung ein als in der ersten Relativstellung (Fig. 7A).

Zwischen den beiden Langlöchern 36 ist ein Steg 38 ausgebildet. Dieser Steg 38 kann gemäß der Darstellung der Fig. 8 entlang einer axialen Hinterkante 28 des Deckbandes der Kontur angepasst werden. Im dargestellten Beispiel wird der Steg 38 in axialer Richtung AR zur Hinterkante des Deckbandes 12 verformt, so dass er an der mehrfachgekrümmten Kontur des Deckbandes anliegt. Hierdurch kann eine Art formschlüssige Verbindung hergestellt werden. Es wird darauf hingewiesen, dass der zweite Befestigungsabschnitt in Fig. 8 lediglich als stilisierter Schnitt dargestellt ist, um den verformten Steg 38 bessere illustrieren zu können. Es ist klar, dass der Mittelabschnitt 22 eigentlich mit dem zweiten Befestigungsabschnitt 24 verbunden ist, auch wenn dies in der Fig. 8 nicht dargestellt ist. Das Wuchtgewicht 18 der Fig. 8 ist in seinem axial vorderen Bereich ähnlich zum Wuchtgewicht 18 der Fig. 6 ausgestaltet und weist einen Einhängabschnitt 32 auf.

Das hier vorgestellte Wuchtgewicht 18 ist in der Regel als eine Art metallisches Band ausgebildet, wobei, wie in der Fig. 2 ersichtlich, dieses Band in unterschiedliche Richtungen gebogen bzw. verformt ist, so dass die verschiedenen Abschnitte ausgebildet sind, die dann für die Montage am Deckband verwendet werden.

Die unter Bezugnahme auf die Figuren 1 bis 8 dargestellten Ausführungsformen des Wuchtgewichts 18, insbesondere der verschiedenen Ausgestaltungen der Befestigungsabschnitte 16, 24 bzw. der weiteren Abschnitte, wie etwa Sicherungsabschnitt 30 oder Einhängabschnitt 32 bzw. des Mittelabschnitts 22 mit oder ohne Verdrehbereich 26 können beliebig miteinander kombiniert werden. So kann beispielsweise ein in Fig. 1 dargestellter erster Befestigungsabschnitt 16, der an einem Vorsprung 14 des Deckbandes 12 eingehängt ist, einen zweiten Befestigungsabschnitt 24 gemäß Fig. 7 aufweisen. Jede aus den Figuren ableitbare Kombination führt zu einer weiteren erfindungsgemäßen Ausführungsform des Wuchtgewichts, auch wenn nicht alle möglichen Kombinationen explizit dargestellt sind.

Das hier vorgestellte Wuchtgewicht ermöglicht insgesamt eine einfache Montage des Wuchtgewichts entlang einer Laufschaufel und am Deckband dieser einen Laufschaufel, wobei der zur endgültigen Befestigung jeweils der Mittelabschnitt oder/und der zweite Befestigungsabschnitt verformt werden muss, um den zweiten Befestigungsabschnitt in seine zweite Relativstellung bezogen auf den ersten Befestigungsabschnitt zu bringen.

### Bezugszeichenliste

- 10: Laufschaufel
- 12: Deckband
- 14: Vorsprung
- 16: erster Befestigungsabschnitt
- 18: Wuchtgewicht
- 20: freies Ende
- 22: Mittelabschnitt
- 24: zweiter Befestigungsabschnitt
- 26: verdrehter Bereich
- 28: axiale Hinterkante
- 30: Sicherungsabschnitt
- 32: Einhängabschnitt
- 34: axiale Vorderkante Laufschaufel
- 36: Langloch
- 38: Steg

## Patentansprüche

1. Wuchtgewicht für eine Laufschaufel (10) einer Turbinenstufe einer Gasturbine, insbesondere Fluggasturbine, umfassend einen ersten gebogenen Befestigungsabschnitt (16), der mit einer axialen Vorderkante (15) eines Deckbandes (12) der Laufschaufel (10) koppelbar ist, einen zweiten Befestigungsabschnitt (24), der mit einer axialen Hinterkante (28) des Deckbandes (12) koppelbar ist, und einen den ersten Befestigungsabschnitt (16) und den zweiten Befestigungsabschnitt (24) verbindenden Mittelabschnitt (22), wobei das Wuchtgewicht (18) als bandartiges Metallelement ausgebildet ist, das ausgehend von einem ersten Ende (20) bis zu einem zweiten Ende mehrere gebogene Bereiche aufweist,
**dadurch gekennzeichnet, dass** bei dem Wuchtgewicht in einem Zustand vor der Montage an der Laufschaufel (10) der Mittelabschnitt (22) einen Torsionsabschnitt (26) aufweist, in dem das bandartige Metallelement um seine Bandlängsachse, die einer Axialrichtung der Gasturbine entspricht, in eine erste Drehrichtung verdreht ist, insbesondere um etwa 90° verdreht ist, wobei sich der zweite Befestigungsabschnitt (24) bezogen auf die Bandlängsachse nach unten erstreckt, was einer Radialrichtung (RR) der Gasturbine entspricht; und dass in einem montierten Zustand (18) an der Laufschaufel (10) der Mittelabschnitt (22) in eine zweite Drehrichtung, die entgegengesetzt zur ersten Drehrichtung ist, verdreht ist, derart dass der Torsionsabschnitt (26) gestreckt ist, wobei der Mittelabschnitts (22) torsionsfrei entlang des Deckbandes (12) geführt ist.

2. Wuchtgewicht nach Anspruch 1, **dadurch gekennzeichnet, dass** der erste Befestigungsabschnitt (16) derart gebogen ist, dass der gebogene erste Befestigungsabschnitt (16) an der axialen Vorderkante (15) des Deckbandes (12) einhängbar ist und im eingehängten Zustand am Deckband (12) zumindest in radialer Richtung (RR) und in Umfangsrichtung (RR) gesichert ist.

3. Wuchtgewicht nach einem der vorhergehenden Ansprüche, **dadurch gekennzeichnet, dass** der zweite Befestigungsabschnitt (24) mehrere längliche Öffnungen (26) aufweist, die ausgehend von einem freien Ende des zweiten Befestigungsabschnitts (24) in regelmäßigen Abständen zueinander angeordnet sind.

4. Wuchtgewicht nach Anspruch 3, **dadurch gekennzeichnet, dass** die länglichen Öffnungen (36) parallel zu einer Biegeachse verlaufen, um die der zweite Befestigungsabschnitt (24) plastisch verformt ist in der zweiten Relativstellung.

5. Wuchtgewicht nach einem der vorhergehenden Ansprüche, **dadurch gekennzeichnet, dass** sich an den ersten Befestigungsabschnitt (16) ein Schaufelkopplungsabschnitt (32) anschließt, welcher derart ausgebildet ist, dass er mit einer Vorderkante der Laufschaufel koppelbar ist.

6. Wuchtgewicht für eine Laufschaufel (10) einer Turbinenstufe einer Gasturbine, insbesondere Fluggasturbine, umfassend einen ersten gebogenen Befestigungsabschnitt (16), der mit einer axialen Vorderkante (15) eines Deckbandes (12) der Laufschaufel (10) koppelbar ist, einen zweiten Befestigungsabschnitt (24), der mit einer axialen Hinterkante (28) des Deckbandes (12) koppelbar ist, und einen den ersten Befestigungsabschnitt (16) und den zweiten Befestigungsabschnitt (24) verbindenden Mittelabschnitt (22), wobei das Wuchtgewicht (18) als bandartiges Metallelement ausgebildet ist, das ausgehend von einem ersten Ende (20) bis zu einem zweiten Ende mehrere gebogene Bereiche aufweist,
**dadurch gekennzeichnet, dass** der zweite Befestigungsabschnitt (24) mehrere längliche Öffnungen (26) aufweist, die ausgehend von einem freien Ende des zweiten Befestigungsabschnitts (24) in regelmäßigen Abständen zueinander angeordnet sind, wobei zwischen benachbarten länglichen Öffnungen (26) ein Steg (38) ausgebildet ist, der in einem montierten Zustand des Wuchtgewichts an der Laufschaufel an der Hinterkante (28) des Deckbandes (12) anliegt, wobei der Steg (38) entlang der Hinterkante (28) des Deckbandes (12) derart verformt ist, dass er an die Kontur der Hinterkante (28) angepasst ist, so dass eine formschlüssige Verbindung hergestellt ist.

7. Wuchtgewicht nach Anspruch 6, **dadurch gekennzeichnet, dass** die länglichen Öffnungen (36) im Wesentlichen parallel zu einer Biegeachse verlaufen, um die der zweite Befestigungsabschnitt (24) plastisch verformt ist in der zweiten Relativstellung.

8. Wuchtgewicht nach Anspruch 6 oder 7, **dadurch gekennzeichnet, dass** sich an den ersten Befestigungsabschnitt (16) ein Schaufelkopplungsabschnitt (32) anschließt, welcher derart ausgebildet ist, dass er mit einer Vorderkante der Laufschaufel koppelbar ist.

9. Laufschaufelkranz einer Turbinenstufe einer Gasturbine, insbesondere Fluggasturbine, mit mehreren in Umfangsrichtung nebeneinander angeordneten Laufschaufeln, die an ihrem radial äußeren Enden einen jeweiligen Deckbandabschnitt aufweisen mit einer axial vorderen Deckbandkante und einer axial hinteren Deckbandkante, wobei an wenigstens einer Laufschaufel (10) an ihrem Deckbandabschnitt (12) ein Wuchtgewicht (18) nach einem der Ansprüche 1 bis 5 oder ein Wuchtgewicht nach einem der Ansprüche 6 bis 8 angeordnet ist.

10. Verfahren zur Anbringung eines Wuchtgewichts (18) an einem Deckbandabschnitt (12) einer Laufschaufel (10) eines Laufschaufelkranzes einer Turbinenstufe einer Gasturbine, umfassend die Schritte:
Bereitstellen von einem Wuchtgewicht (18) nach Anspruch 1;
Einführen des ersten gebogenen Befestigungsabschnitts (16) und des Mittelabschnitts (22) zwischen zwei benachbarten Laufschaufeln (10) des Laufschaufelkranzes entgegen einer Strömungsrichtung der Gasturbine;
Anordnen und Koppeln des ersten gebogenen Befestigungsabschnitts (16) an einer axial vorderen Deckbandkante (15) des Deckbandabschnitts (12);
Verdrehen des Mittelabschnitts (22) in eine zweite Drehrichtung, die entgegengesetzt zur ersten Drehrichtung ist, derart dass der Torsionsabschnitt (26) im Wesentlichen gestreckt wird, wobei der Mittelabschnitts (22) torsionsfrei entlang des Deckbandes (12) geführt wird, so dass der zweite Befestigungsabschnitt (24) durch eine Schwenkbewegung nach oben mit einer axial hinteren Deckbandkante (28) des Deckbandabschnitts (12) gekoppelt wird.

## Claims

1. Balancing weight for a rotor blade (10) of a turbine stage of a gas turbine, in particular an aircraft gas turbine, comprising a first curved fastening section (16) that can be coupled to an axial leading edge (15) of a shroud (12) of the rotor blade (10), a second fastening section (24) that can be coupled to an axial trailing edge (28) of the shroud (12), and a middle section (22) connecting the first fastening section (16) and the second fastening section (24), the balancing weight (18) being designed as a strip-like metal element that has a plurality of curved regions starting from a first end (20) as far as a second end, **characterized in that**, prior to the balancing weight being assembled on the rotor blade (10), the middle section (22) has a torsion section (26), in which the strip-like metal element is twisted, in particular by approximately 90°, about the longitudinal axis of the strip, which corresponds to an axial direction of the gas turbine, in a first rotational direction, the second fastening section (24) extending downward, with respect to the longitudinal axis of the strip, which corresponds to a radial direction (RR) of the gas turbine; and that, when assembled (18) on the rotor blade (10), the middle section (22) is twisted in a second rotational direction, which is counter to the first rotational direction, such that the torsion section (26) is stretched, the middle section (22) being guided along the shroud (12) in a torsion-free manner.

2. Balancing weight according to claim 1, **characterized in that** the first fastening section (16) is curved such that the curved first fastening section (16) can be hooked onto the axial leading edge (15) of the shroud (12) and, when hooked on, is secured on the shroud (12) at least in a radial direction (RR) and in a circumferential direction (RR).

3. Balancing weight according to either of the preceding claims, **characterized in that** the second fastening section (24) has a plurality of elongate openings (26) that are arranged at regular distances from one another, starting from a free end of the second fastening section (24).

4. Balancing weight according to claim 3, **characterized in that** the elongate openings (36) run in parallel with a bending axis, about which the second fastening section (24) is plastically deformed in the second relative position.

5. Balancing weight according to any of the preceding claims, **characterized in that** the first fastening section (16) is adjoined by a blade coupling section (32) which is designed such that it can be coupled to a leading edge of the rotor blade.

6. Balancing weight for a rotor blade (10) of a turbine stage of a gas turbine, in particular an aircraft gas turbine, comprising a first curved fastening section (16) that can be coupled to an axial leading edge (15) of a shroud (12) of the rotor blade (10), a second fastening section (24) that can be coupled to an axial trailing edge (28) of the shroud (12), and a middle section (22) connecting the first fastening section (16) and the second fastening section (24), the balancing weight (18) being designed as a strip-like metal element that has a plurality of curved regions starting from a first end (20) as far as a second end, **characterized in that** the second fastening section (24) has a plurality of elongate openings (26) that are arranged at regular distances from one another, starting from a free end of the second fastening section (24), a connecting portion (38) being formed between adjacent elongate openings (26) which, when the balancing weight is assembled on the rotor blade, abuts the trailing edge (28) of the shroud (12), the connecting portion (38) being deformed along the trailing edge (28) of the shroud (12) such that it is adapted to the contour of the trailing edge (28), so that an interlocking connection is established.

7. Balancing weight according to claim 6, **characterized in that** the elongate openings (36) run substantially in parallel with a bending axis, about which the second fastening section (24) is plastically deformed in the second relative position.

8. Balancing weight according to either claim 6 or claim 7, **characterized in that** the first fastening section (16) is adjoined by a blade coupling section (32) which is designed such that it can be coupled to a leading edge of the rotor blade.

9. Rotor blade ring of a turbine stage of a gas turbine, in particular an aircraft gas turbine, comprising a plurality of rotor blades arranged next to one another in the circumferential direction which have on their radially outer ends a respective shroud section which has an axially leading shroud edge and an axially trailing shroud edge, wherein a balancing weight (18) according to any of claims 1 to 5 or a balancing weight according to any of claims 6 to 8 is arranged on at least one rotor blade (10) on the shroud section (12) thereof.

10. Method for attaching a balancing weight (18) to a shroud section (12) of a rotor blade (10) of a rotor blade ring of a turbine stage of a gas turbine, comprising the steps of:
providing a balancing weight (18) according to claim 1;
introducing the first curved fastening section (16) and the middle section (22) between two adjacent rotor blades (10) of the rotor blade ring counter to a flow direction of the gas turbine;
arranging and coupling the first curved fastening section (16) on and to an axially leading shroud edge (15) of the shroud section (12);
twisting the middle section (22) in a second rotational direction, which is counter to the first rotational direction, such that the torsion section (26) is substantially stretched, wherein the middle section (22) is guided along the shroud (12) in a torsion-free manner, so that the second fastening section (24) is coupled to an axially trailing shroud edge (28) of the shroud section (12) by means of an upward pivot movement.

## Revendications

1. Masse d'équilibrage pour une aube directrice (10) d'un étage de turbine d'une turbine à gaz, en particulier d'une turbine à gaz d'aéronef, comprenant une première section de fixation (16) incurvée qui peut être accouplée à un bord axialement avant (15) d'une bande de recouvrement (12) de l'aube directrice (10), une seconde section de fixation (24) qui peut être accouplée à un bord axialement arrière (28) de la bande de recouvrement (12), et une section médiane (22) reliant la première section de fixation (16) et la seconde section de fixation (24), la masse d'équilibrage (18) étant conçue sous la forme d'un élément métallique en forme de bande qui, d'une première extrémité (20) à une seconde extrémité, comporte une pluralité de régions courbes, **caractérisée en ce que** la section médiane (22) comporte une section de torsion (26) dans le cas de la masse d'équilibrage dans un état avant l'assemblage sur l'aube directrice (10), section dans laquelle l'élément métallique en forme de bande est mis en rotation autour de son axe de bande longitudinal correspondant à une direction axiale de la turbine à gaz, dans un premier sens de rotation, notamment mis en rotation d'environ 90°, la seconde section de fixation (24) s'étendant vers le bas par rapport à l'axe longitudinal de la bande, ce qui correspond à une direction radiale (RR) de la turbine à gaz ; et
**en ce que**, dans un état monté (18) sur l'aube directrice (10), la section médiane (22) est mise en rotation dans un second sens de rotation opposé au premier sens de rotation, de sorte que la section de torsion (26) soit étirée, la section médiane (22) étant guidée sans torsion le long de la bande de recouvrement (12).

2. Masse d'équilibrage selon la revendication 1, **caractérisée en ce que** la première section de fixation (16) est courbée de sorte que la première section de fixation (16) incurvée sur le bord axialement avant (15) de la bande de recouvrement (12) puisse être suspendue et, à l'état suspendu sur la bande de recouvrement (12), est fixée au moins dans la direction radiale (RR) et dans la direction circonférentielle (RR).

3. Masse d'équilibrage selon l'une des revendications précédentes, **caractérisée en ce que** la seconde section de fixation (24) comporte une pluralité d'ouvertures allongées (26) qui, partant d'une extrémité libre de la seconde section de fixation (24), sont disposées à intervalles réguliers l'une de l'autre.

4. Masse d'équilibrage selon la revendication 3, **caractérisée en ce que** les ouvertures allongées (36) s'étendent parallèlement à un axe de flexion autour duquel la seconde section de fixation (24) est déformée plastiquement dans la seconde position relative.

5. Masse d'équilibrage selon l'une des revendications précédentes, **caractérisée en ce que** la première section de fixation (16) est suivie d'une section d'accouplement d'aube (32) qui est conçue de manière à pouvoir être accouplée à un bord d'attaque de l'aube directrice.

6. Masse d'équilibrage pour une aube directrice (10) d'un étage de turbine d'une turbine à gaz, en particulier d'une turbine à gaz d'aéronef, comprenant une première section de fixation (16) incurvée qui peut être accouplée à un bord axialement avant (15) d'une bande de recouvrement (12) de l'aube directrice (10), une seconde section de fixation (24) qui peut être accouplée à un bord axialement arrière (28) de la bande de recouvrement (12), et une section médiane (22) reliant la première section de fixation (16) et la seconde section de fixation (24), la masse d'équilibrage (18) étant conçue sous la forme d'un élément métallique en forme de bande qui, d'une première extrémité (20) à une seconde extrémité, comporte une pluralité de régions courbes, **caractérisée en ce que** la seconde section de fixation (24) comporte une pluralité d'ouvertures allongées (26) qui, partant d'une extrémité libre de la seconde section de fixation (24), sont disposées à intervalles réguliers les unes des autres, une passerelle (38) étant formée entre des ouvertures allongées adjacentes (26), laquelle passerelle est, dans un état monté de la masse d'équilibrage sur l'aube directrice contre le bord arrière (28) de la bande de recouvrement (12), la passerelle (38) étant déformée le long du bord arrière (28) de la bande de recouvrement (12) de sorte qu'elle soit adaptée au contour du bord arrière (28) de sorte qu'une liaison par complémentarité de forme soit établie.

7. Masse d'équilibrage selon la revendication 6, **caractérisée en ce que** les ouvertures allongées (36) s'étendent de manière sensiblement parallèle à un axe de flexion autour duquel la seconde section de fixation (24) est déformée plastiquement dans la seconde position relative.

8. Masse d'équilibrage selon la revendication 6 ou 7, **caractérisée en ce qu'**une section d'accouplement d'aube (32) se raccorde à la première section de fixation (16), la section étant conçue de manière à pouvoir être accouplée à un bord avant de l'aube directrice.

9. Couronne d'aubes directrices d'un étage de turbine d'une turbine à gaz, en particulier une turbine à gaz d'aéronef, avec plusieurs aubes directrices disposées côte à côte dans la direction circonférentielle, lesquelles comportent une section de bande de recouvrement respective à leurs extrémités radialement extérieures avec un bord de bande de recouvrement axialement avant et un bord de bande de recouvrement axialement arrière, une masse d'équilibrage (18) selon l'une des revendications 1 à 5 ou une masse d'équilibrage selon l'une des revendications 6 à 8 étant disposée sur au moins une aube directrice (10) au niveau de sa section de bande de recouvrement (12).

10. Procédé de fixation d'une masse d'équilibrage (18) sur une section de bande de recouvrement (12) d'une aube directrice (10) d'une couronne d'aubes directrices d'un étage de turbine d'une turbine à gaz, comprenant les étapes :
de fourniture d'une masse d'équilibrage (18) selon la revendication 1 ;
d'insertion de la première section de fixation (16) incurvée et de la section médiane (22) entre deux aubes directrices (10) adjacentes de la couronne d'aubes directrices contre un sens d'écoulement de la turbine à gaz ;
d'agencement et de couplage de la première section de fixation (16) incurvée à un bord de bande de recouvrement axialement avant (15) de la section de bande de recouvrement (12) ;
de mise en rotation de la section médiane (22) dans un second sens de rotation opposé au premier sens de rotation, de sorte que la section de torsion (26) soit sensiblement étirée, la section médiane (22) étant guidée sans torsion le long de la bande de recouvrement (12), de sorte que la seconde section de fixation (24) soit accouplée par un mouvement de pivotement vers le haut à un bord de bande de recouvrement axialement arrière (28) de la section de bande de recouvrement (12).
